# EUROPÄISCHE PATENTANMELDUNG

(11) **EP 4 635 882 A1**
(43) Veröffentlichungstag der Anmeldung: **22.10.2025**
(21) Anmeldenummer: 25170291.6
(22) Anmeldetag: 14.04.2025
(51) Int. Cl.: B65G 27/04, B65G 27/08

(54) **REINRAUM-FÖRDEREINRICHTUNG ZUR ANORDNUNG IN EINEM REINRAUM-BARRIERESYSTEM**

(30) Priorität: 16.04.2024 DE 102024110598
(71) Anmelder: Syntegon Technology GmbH, 71332 Waiblingen (DE)
(72) Erfinder: Ilgenfritz, Markus, 91555 Feuchtwangen (DE); Krauß, Ulrich, 74532 Ilshofen (DE); Nagler, Stefan, 73485 Unterschneidheim (DE); Stegmeier, Samuel, 74594 Kreßberg (DE); Bisgin, Mervan, 74564 Crailsheim (DE)
(74) Vertreter: DREISS Patentanwälte PartG mbB

(57) **Zusammenfassung**

Die Erfindung betrifft eine Reinraum-Fördereinrichtung (10) zur Anordnung in einem Reinraum-Barrieresystem, umfassend eine Förderrinne (12) für Speicherung und Transport von pharmazeutischem Schüttgut, wobei die Förderrinne einen Rinnenkörper (18) aufweist, der einen rinnenförmigen Förderraum (20) begrenzt, welcher sich entlang einer Förderachse (22) für das pharmazeutische Schüttgut erstreckt, ferner umfassend einen Vibrationsantrieb (14) zur Erzeugung einer auf den Rinnenkörper übertragbaren Vibrationsbewegung, wobei der Vibrationsantrieb und der Rinnenkörper über eine Verbindungseinrichtung (16) lösbar miteinander verbunden oder verbindbar sind, wobei die Verbindungseinrichtung mindestens ein Verriegelungselement aufweist, das in einer Halterung verschiebbar gelagert ist und längs einer Verriegelungsachse zwischen einer Verriegelungsposition, in welcher der Rinnenkörper mit dem Vibrationsantrieb verbunden ist, und einer Freigabeposition, in welcher der Rinnenkörper von dem Vibrationsantrieb gelöst ist, verschiebbar ist.

## Beschreibung

Die Erfindung betrifft eine Reinraum-Fördereinrichtung zur Anordnung in einem Reinraum-Barrieresystem, umfassend eine Förderrinne für Speicherung und Transport von pharmazeutischem Schüttgut, wobei die Förderrinne einen Rinnenkörper aufweist, der einen rinnenförmigen Förderraum begrenzt, welcher sich entlang einer Förderachse für das pharmazeutische Schüttgut erstreckt, ferner umfassend einen Vibrationsantrieb zur Erzeugung einer auf den Rinnenkörper übertragbaren Vibrationsbewegung, wobei der Vibrationsantrieb und der Rinnenkörper über eine Verbindungseinrichtung lösbar miteinander verbunden oder verbindbar sind.

Aus der DE 43 14 660 A1 ist ein Vibrationswendelförderer bekannt, der einen auswechselbaren Fördertopf umfasst, der mit einer Antriebseinheit lösbar verbunden ist, und zwar entweder über werkzeugbetätigte mechanischen Befestigungsmittel oder über eine Vakuumeinrichtung.

Es wäre denkbar, solche Befestigungsmittel oder eine solche Vakuumeinrichtung als Verbindungseinrichtung einer eingangs genannten Reinraum-Fördereinrichtung zu verwenden. Nachteilig bei werkzeugbetätigten mechanischen Befestigungsmitteln (in der Praxis: Schrauben) ist jedoch eine vergleichsweise schwierige Automatisierbarkeit einer Betätigung, die für einen schnellen und einfachen Austausch einer verunreinigten Förderrinne gegen eine sterile neue Förderrinne aber gewünscht ist.

Die genannte Vakuumeinrichtung ermöglicht demgegenüber eine vereinfachte Automatisierbarkeit. Es hat sich jedoch herausgestellt, dass die Vakuum führenden Bauteile nur sehr schwierig und aufwändig gereinigt werden können, sodass der Vorteil einer schnellen und einfachen Wechselbarkeit einer Förderrinne mit einer erschwerten Reinigung erkauft werden muss. Hinzu kommt, dass eine solche Reinigung in einer Reinraum-Umgebung höchsten Anforderungen genügen muss.

Hiervon ausgehend liegt der vorliegenden Erfindung die Aufgabe zugrunde, eine Reinraum-Fördereinrichtung anzugeben, welche sowohl einfach handhabbar als auch einfach reinigbar ist.

Diese Aufgabe wird bei einer Reinraum-Fördereinrichtung der eingangs genannten Art erfindungsgemäß dadurch gelöst, dass die Verbindungseinrichtung mindestens ein Verriegelungselement aufweist, das in einer Halterung verschiebbar gelagert ist und längs einer Verriegelungsachse zwischen einer Verriegelungsposition, in welcher der Rinnenkörper mit dem Vibrationsantrieb verbunden ist, und einer Freigabeposition, in welcher der Rinnenkörper von dem Vibrationsantrieb gelöst ist, verschiebbar ist.

Die erfindungsgemäße Reinraum-Fördereinrichtung umfasst eine Verbindungseinrichtung mit einem einfach betätigbaren und gut reinigbaren Verriegelungselement, das in einer Halterung gelagert und längs einer Verriegelungsachse verschiebbar ist. In verschiedenen Positionen des Verriegelungselements entlang der Verriegelungsachse nimmt das Verriegelungselement eine Verriegelungsposition und eine Freigabeposition ein. In der Verriegelungsposition ist der Rinnenkörper mit dem Vibrationsantrieb verbunden. In der Freigabeposition ist der Rinnenkörper von dem Vibrationsantrieb gelöst, sodass der Rinnenkörper von dem Vibrationsantrieb abgenommen und ein (neuer) Rinnenkörper mit dem Vibrationsantrieb gefügt und verriegelt werden kann.

Insbesondere ist es für eine Überführung des Verriegelungselements aus der Verriegelungsposition in die Freigabeposition und aus der Freigabeposition in die Verriegelungsposition nicht erforderlich, das Verriegelungselement um die Verriegelungsachse herum zu verdrehen. Dies trägt erheblich zu einer vereinfachten Betätigung des Verriegelungselements bei.

Bevorzugt ist es, wenn sich die Verriegelungsachse in einer horizontalen Ebene erstreckt und somit entlang einer Vertikalachse gesehen vergleichsweise wenig Bauraum beansprucht. Auf diese Weise eine längs der Vertikalachse gemessene Höhe der Reinraum-Fördereinrichtung im Wesentlichen nur durch die jeweiligen Höhen des Vibrationsantriebs und des Rinnenkörpers bestimmt. Die Verbindungseinrichtung kann relativ flach ausgeführt werden, insbesondere mit einer plattenförmigen Halterung und mit einem Verriegelungselement das sich entlang einer horizontalen Verriegelungsachse erstreckt.

Bevorzugt ist es ferner, wenn sich die Verriegelungsachse quer, insbesondere senkrecht, zu der Förderachse erstreckt. Dies hat den Vorteil, dass der Vibrationsantrieb, welcher eine entlang der Förderachse gerichtete Transportbewegung des Schüttguts erzeugt, keinen mechanischen Einfluss auf die Position des Verriegelungselements hat. Insbesondere führt ein aktivierter Vibrationsantrieb nicht dazu, dass die Verbindungseinrichtung in unbeabsichtigter Weise betätigt wird.

Bevorzugt ist es ferner, wenn die Verbindungseinrichtung eine Vorspanneinrichtung aufweist, mittels welcher das mindestens eine Verriegelungselement in der Verriegelungsposition vorgespannt ist. Dies hat den Vorteil, dass es für die Aufrechterhaltung einer Verbindung zwischen dem Rinnenkörper und dem Vibrationsantrieb nicht erforderlich ist, das Verriegelungselement dauerhaft zu betätigen. Vielmehr ist die Verbindungseinrichtung in einem unbetätigten Grundzustand verriegelt. Diese Verriegelung ist auch wirksam, wenn die Förderrinne und der Vibrationsantrieb voneinander entfernt angeordnet sind, sodass ein unbeabsichtigtes Fügen der Förderrinne mit dem Vibrationsantrieb verhindert wird.

Es ist ferner bevorzugt, dass das mindestens eine Verriegelungselement bezogen auf die Verriegelungsachse rotationssymmetrisch ist. Auf diese Weise kann ein besonders einfach aufgebautes Verriegelungselement bereitgestellt werden, dessen Betätigbarkeit und Überführbarkeit längs der Verriegelungsachse von einer Drehlage des Verriegelungselements um die Verriegelungsachse unabhängig ist.

Prinzipiell ist es denkbar, dass die Halterung an der Förderrinne angeordnet ist. Es ist jedoch bevorzugt, dass die Halterung an dem Vibrationsantrieb angeordnet ist, da der Vibrationsantrieb üblicherweise als Teil der Reinraum-Fördereinrichtung in einem Reinraum eines Barrieresystems verbleibt. Das pharmazeutische Schüttgut (beispielsweise Behälterdeckel) kommt üblicherweise nur mit der Förderrinne der Reinraum-Fördereinrichtung in Kontakt, sodass bei einem Chargenwechsel lediglich die Förderrinne ausgetauscht wird und die Halterung samt Verriegelungselement an dem Vibrationsantrieb verbleiben kann.

Vorzugsweise wirkt das mindestens eine Verriegelungselement in seiner Verriegelungsposition formschlüssig und/oder kraftschlüssig mit einem Gegenelement zusammen. Das Gegenelement ist vorzugsweise mit dem Rinnenkörper verbunden, insbesondere unbewegbar mit dem Rinnenkörper verbunden.

Eine bevorzugte Ausführungsform sieht vor, dass das Gegenelement rotationssymmetrisch ausgebildet ist und somit einfach herstellbar ist.

Insbesondere ist es bevorzugt, dass das Verriegelungselement mittels einer zu der Verriegelungsachse parallelen Betätigungskraft (vorzugsweise einer Druckkraft) aus der Verriegelungsposition in die Freigabeposition überführbar ist. Eine solche Betätigungskraft kann beispielsweise von Hand aufgebracht werden. Insbesondere handelt es sich bei der Betätigungskraft um eine Druckkraft auf eine quer zu der Verriegelungsachse orientierte Betätigungsfläche des Verriegelungselements. Die Betätigungsfläche kann beispielsweise durch eine Stirnfläche des Verriegelungselements gebildet sein.

Die Verbindungseinrichtung umfasst vorzugsweise eine Mehrzahl von Verriegelungselementen, welche vorzugsweise zueinander parallel angeordnet und in der Halterung gelagert sind. Jedes der Verriegelungselemente kann mit einem einzigen Gegenelement zusammenwirken; besonders bevorzugt ist es jedoch, wenn eine Mehrzahl von Verriegelungselementen, beispielsweise zwei Verriegelungselemente, mit genau einem zugeordneten Gegenelement zusammenwirken. Auf diese Weise ist eine besonders zuverlässige Sicherung der Förderrinne an dem Vibrationsantrieb ermöglicht.

Für den Fall, dass eine Mehrzahl von Verriegelungselementen vorgesehen ist, wird eine Betätigungseinrichtung zur simultanen Betätigung der Mehrzahl der Verriegelungselemente vorgeschlagen. Beispielsweise umfasst die Betätigungseinrichtung einen Betätigungsabschnitt, der als Ganzes gehandhabt werden kann und der in gleichzeitiger Anlage mit unterschiedlichen Betätigungsflächen unterschiedlicher Verriegelungselemente gebracht werden kann.

Es ist ferner vorteilhaft, wenn die Reinraum-Fördereinrichtung einen Aktor zur Betätigung des mindestens einen Verriegelungselements oder der Mehrzahl von Verriegelungselementen oder zur Betätigung der vorgenannten Betätigungseinrichtung umfasst. Dies ermöglicht eine automatisierte Betätigung der Verbindungseinrichtung. Beispielsweise kann es sich bei dem Aktor um eine bezogen auf den Vibrationsantrieb stationäre Antriebseinrichtung handeln, die in dem Reinraum des Barrieresystems angeordnet ist (beispielsweise ein pneumatischer, hydraulischer oder elektrischer Antrieb).

Bei einem der vorgenannten Aktoren kann es sich auch um einen robotischen Manipulator handeln, der in dem Reinraum des Barrieresystems angeordnet ist und der einen Wirkabschnitt aufweist, welcher zur Betätigung des mindestens einen Verriegelungselements oder der Mehrzahl von Verriegelungselementen oder zur Betätigung der vorgenannten Betätigungseinrichtung ausgebildet ist**.**

Es wird ferner vorgeschlagen, dass die Reinraum-Fördereinrichtung eine Handhabungsvorrichtung zur Handhabung und Positionierung der Förderrinne relativ zu der Vibrationseinrichtung umfasst. Eine solche Handhabungsvorrichtung kann eine fest vorgegebene Kinematik zur Definition von Transportwegen der Förderrinne aufweisen; bevorzugt ist die Handhabungsvorrichtung jedoch durch einen frei programmierbaren robotischen Manipulator gebildet. Dieser robotische Manipulator bildet vorzugsweise gleichzeitig einen vorstehend erläuterten Aktor zur Betätigung des mindestens einen Verriegelungselements, einer Mehrzahl von Verriegelungselementen oder einer Betätigungseinrichtung.

Ferner ist es möglich, dass die Förderrinne und/oder die Handhabungsvorrichtung einen Betätigungskörper aufweist, mittels welchem eine Betätigungsfläche des mindestens einen Verriegelungselements durch Aufsetzen der Förderrinne auf den Vibrationsantrieb - direkt oder zumindest indirekt über eine Betätigungseinrichtung - betätigbar ist. Beispielsweise handelt es sich bei dem Betätigungskörper um einen Keil mit einer bezogen auf eine Vertikalebene geneigten Andrückfläche, welche bei einer Vertikalbewegung der Förderrinne in Richtung auf den Vibrationsantrieb eine horizontal gerichtete Betätigungskraft, insbesondere Druckkraft, auf eine Betätigungsfläche des mindestens einen Verriegelungselements ausübt.

Weitere Merkmale und Vorteile der Erfindung sind Gegenstand der nachfolgenden Beschreibung eines bevorzugten Ausführungsbeispiels.

In der Zeichnung zeigt:
- Fig. 1: eine perspektivische Seitenansicht einer Ausführungsform einer Reinraum-Fördereinrichtung mit einer Förderrinne, einem Vibrationsantrieb und einer Verbindungseinrichtung;
- Fig. 2: eine perspektivische Ansicht des Vibrationsantriebs sowie einer Halterung mit Verriegelungselementen der Verbindungseinrichtung;
- Fig. 3: eine der Fig. 3 entsprechende perspektivische Ansicht in einer geschnittenen Darstellung der Halterung;
- Fig. 4: eine der Fig. 3 entsprechende Draufsicht in einer Verriegelungsposition der Verriegelungselemente;
- Fig. 5: eine der Fig. 4 entsprechende Draufsicht in einer Freigabeposition der Verriegelungselemente;
- Fig. 6: eine perspektivische Ansicht der Förderrinne mit Gegenelementen der Verbindungseinrichtung;
- Fig. 7: eine teilweise geschnittene Seitenansicht der Reinraum-Fördereinrichtung; und
- Fig. 8: eine Vorderansicht einer weiteren Ausführungsform einer Reinraum-Fördereinrichtung.

Eine Ausführungsform einer Reinraum-Fördereinrichtung ist in der Zeichnung insgesamt mit dem Bezugszeichen 10 bezeichnet. Die Reinraum-Fördereinrichtung 10 wird nachfolgend verkürzt als "Fördereinrichtung 10" bezeichnet.

Die Fördereinrichtung 10 umfasst eine Förderrinne 12 zur Zwischenspeicherung und zum Transport von pharmazeutischem Schüttgut, beispielsweise von Behälterdeckeln.

Die Fördereinrichtung 10 umfasst ferner einen Vibrationsantrieb 14 sowie eine Verbindungseinrichtung 16 zur lösbaren Verbindung des Vibrationsantriebs 14 mit einem Rinnenkörper 18 der Förderrinne 12**.**

Der Rinnenkörper 18 begrenzt einen rinnenförmigen, insbesondere quaderförmigen Förderraum 20**,** der sich entlang einer Förderachse 22 von einem Rinneneingang 24 zu einem Rinnenausgang 26 erstreckt, wobei benachbart zu dem Rinnenausgang 26 eine optionale Dosierblende 28 vorgesehen ist.

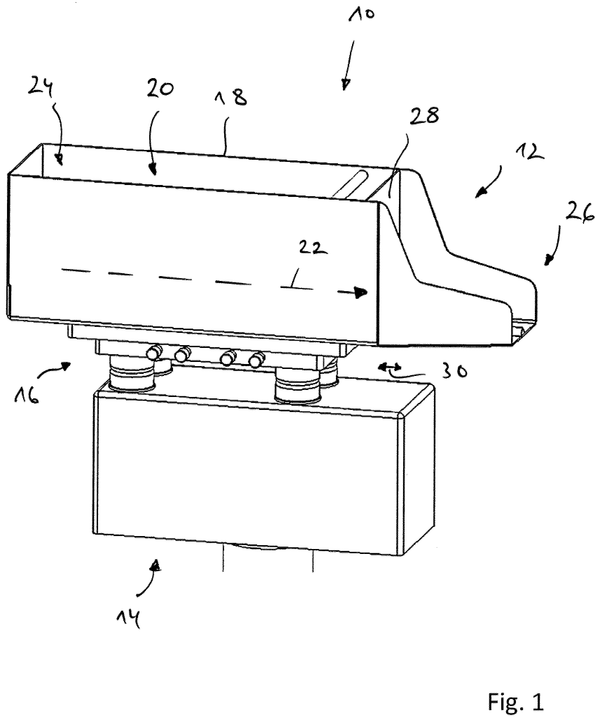

Der Vibrationsantrieb 14 erzeugt eine in Figur 1 mit einem Doppelpfeil angedeutete Vibrationsbewegung 30, welche über die Verbindungseinrichtung 16 hinweg von dem Vibrationsantrieb 14 auf den Rinnenkörper 18 übertragbar ist.

Die Förderachse 22 erstreckt sich entlang des Förderraums 20 und parallel zu der Achse der Vibrationsbewegung 30. Die Förderachse 22 ist insbesondere geradlinig.

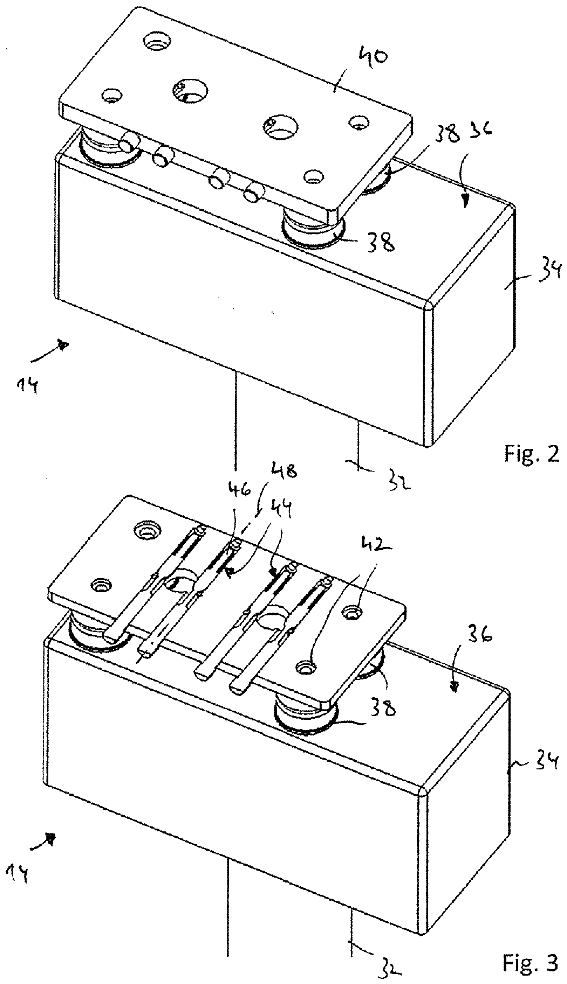

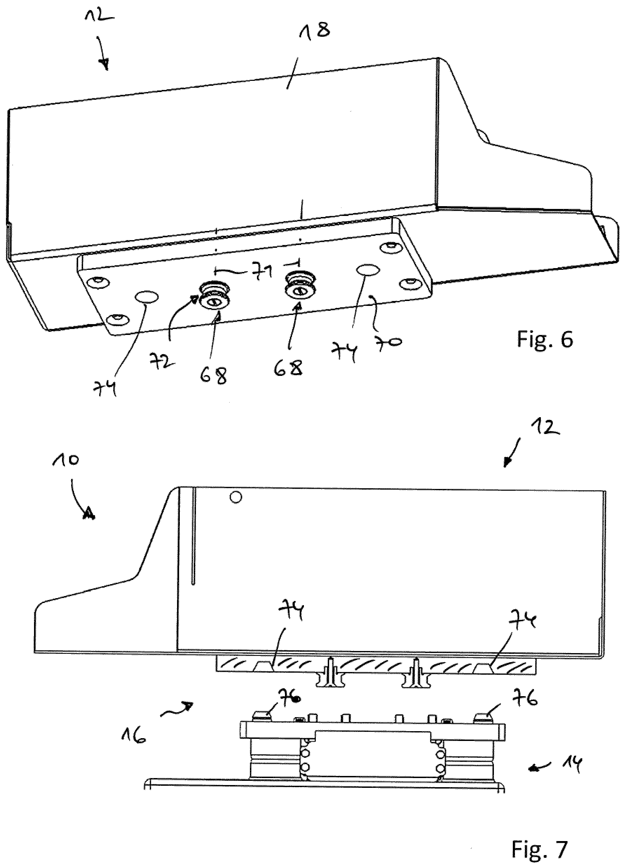

Nachfolgend werden unter Bezugnahme auf die Figuren 2 bis 5 Bauteile der Verbindungseinrichtung 16 beschrieben, welche dem Vibrationsantrieb 14 zugeordnet sind. Bauteile der Verbindungseinrichtung 16, welche der Förderrinne 12 zugeordnet sind, werden unter Bezugnahme insbesondere auf die Figur 6 beschrieben.

Der Vibrationsantrieb 14 weist ein Gestell 32 auf, mittels welchem der Vibrationsantrieb 14 ortsfest in einem Reinraum eines Barrieresystems, beispielsweise einem Isolator, aufgestellt ist.

Der Vibrationsantrieb 14 weist ein Gehäuse 34 auf, mit einer vorzugsweise horizontalen Oberseite 36, an welcher eine Mehrzahl von Übertragungselementen 38 angeordnet sind. Die Übertragungselemente 38 übertragen eine Vibrationsbewegung auf eine Halterung 40, welche oberhalb des Gehäuses 34 angeordnet ist.

Die Halterung 40 ist vorzugsweise plattenförmig und erstreckt sich in einer vorzugsweise horizontalen Ebene.

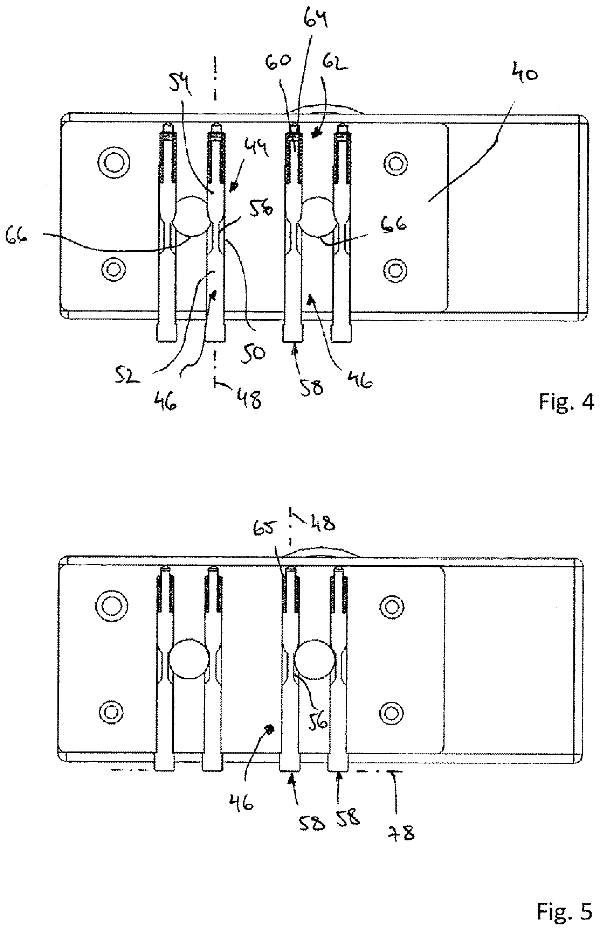

Die Halterung 40 ist über Verbindungselemente 42 mit den Übertragungselementen 38 des Vibrationsantriebs 14 verbunden. Die Halterung 40 ist in den Figuren 3 und 5 in einem längs einer Horizontalebene geschnittenen Zustand dargestellt.

Die Halterung 40 weist mindestens eine Aufnahme 44 zur Anordnung eines Verriegelungselements 46 auf, das in der Aufnahme 44 längs einer Verriegelungsachse 48 relativ zu der Halterung 40 verschiebbar ist.

Die mindestens eine Aufnahme 44 umfasst eine hohlzylindrische Linearführung 50, welche zur Führung des mindestens einen Verriegelungselements 46 längs der Verriegelungsachse 48 dient, vgl. Figur 4.

Das Verriegelungselement 46 weist mindestens einen Führungsabschnitt 52, 54 auf und mindestens einen Freigabeabschnitt 56. Vorzugsweise ist der Freigabeabschnitt 56 längs der Verriegelungsachse 48 gesehen zwischen zwei Führungsabschnitten 52 und 54 angeordnet. Der Freigabeabschnitt 56 ist beispielsweise durch eine Aussparung oder Einschnürung gebildet, welche bezogen auf eine radiale Begrenzung des mindestens einen Führungsabschnitts 52, 54 nach radial innen versetzt ist.

Das mindestens eine Verriegelungselement 46 weist eine sich quer, insbesondere senkrecht, zu der Verriegelungsachse 48 erstreckende Betätigungsfläche 58 auf, welche insbesondere an einer Stirnseite des mindestens einen Verriegelungselements 46 angeordnet ist.

Das Verriegelungselement 46 weist an seinem der Betätigungsfläche 58 abgewandten Ende einen Abschnitt 60 auf, der mit einer Vorspanneinrichtung 62 zusammenwirkt. Diese ist beispielsweise in Form einer Druckfeder 64 ausgebildet, welche sich einenends an einem Absatz 65 der Halterung 40 und anderenends an dem Abschnitt 60 abstützt, sodass das mindestens eine Verriegelungselement 46 in einer Verriegelungsposition (vgl. Figuren 3 und 4) vorgespannt ist.

Bei Ausübung einer Druckkraft auf die Betätigungsfläche 58 eines Verriegelungselements 46 wird das Verriegelungselement 46 längs der Verriegelungsachse 48 in eine Freigabeposition (vgl. Figur 5) überführt.

Die Halterung 40 umfasst beispielsweise im Querschnitt kreisförmige Gegenelementaufnahmen 66, welche zur Aufnahme von Gegenelementen 68 (vgl. Figur 6) dienen. Die Gegenelementaufnahmen 66 sind bezogen auf die Halterung 40 unbewegbar. In der Verriegelungsposition des Verriegelungselements 46 überlappt der Führungsabschnitt 54 mit der Gegenelementaufnahme 66, vgl. Figur 4 und bildet in diesem Zustand einen Formschlussabschnitt für einen Formschluss mit einem Gegenelement 68. In einem betätigten Zustand / in der Freigabeposition des mindestens einen Verriegelungselements 46 überlappt der Freigabeabschnitt 56 mit der Gegenelementaufnahme 66, vgl. Figur 5.

Die Gegenelemente 68 sind fest mit dem Rinnenkörper 18 der Förderrinne 12 verbunden, vgl. Figur 6, beispielsweise unter Zwischenschaltung eines vorzugsweise plattenförmigen Zwischenkörpers 70.

Die Gegenelemente 68 erstrecken sich vorzugsweise entlang jeweiliger Erstreckungsachse 71, welche - jedenfalls bei einer Aufsetzbewegung der Förderrinne 12 auf den Vibrationsantrieb 14 und im Gebrauchszustand der auf den Vibrationsantrieb 14 aufgesetzten Förderrinne 12 - vertikal orientiert sind.

Die Gegenelemente 68 weisen einen beispielsweise rillenförmigen Formschlussabschnitt 72 auf, der - wenn die Förderrinne 12 auf den Vibrationsantrieb 14 aufgesetzt ist und wenn das Verriegelungselement 46 seine Verriegelungsposition einnimmt - formschlüssig mit dem Führungsabschnitt 54 des Verriegelungselements 46 zusammenwirkt.

Bevorzugt ist es, dass genau ein Gegenelement 68 mit genau zwei Verriegelungselementen 46 zusammenwirkt, die bezogen auf dieses Gegenelement 68 auf voneinander abgewandten Seiten angeordnet sind.

Mit genau zwei Gegenelementen 68, welche in zwei Gegenelementaufnahmen 66 einführbar sind, ist eine auf eine Horizontalebene bezogene Drehlage der Förderrinne 12 relativ zu dem Vibrationsantrieb 14 bereits hinreichend definiert; eine besonders präzise Anordnung der Förderrinne 12 an einen Vibrationsantrieb 14 ergibt sich zusätzlich oder alternativ hierzu, wenn Zentriervorrichtungen verwendet werden, beispielsweise mit ersten Zentrierabschnitten 74, die der Förderrinne 12 zugeordnet sind, und mit komplementären zweiten Zentrierabschnitten 76, die dem Vibrationsantrieb 14 zugeordnet sind, vgl. Figuren 6 und 7.

Es ist denkbar, ein Verriegelungselement oder eine Mehrzahl von Verriegelungselementen 46 direkt zu betätigen, entweder manuell oder mittels eines Aktors. Bevorzugt ist eine simultane Betätigung einer Mehrzahl von Betätigungsflächen 58 innerhalb einer Betätigungsebene 78, vgl. Figur 5.

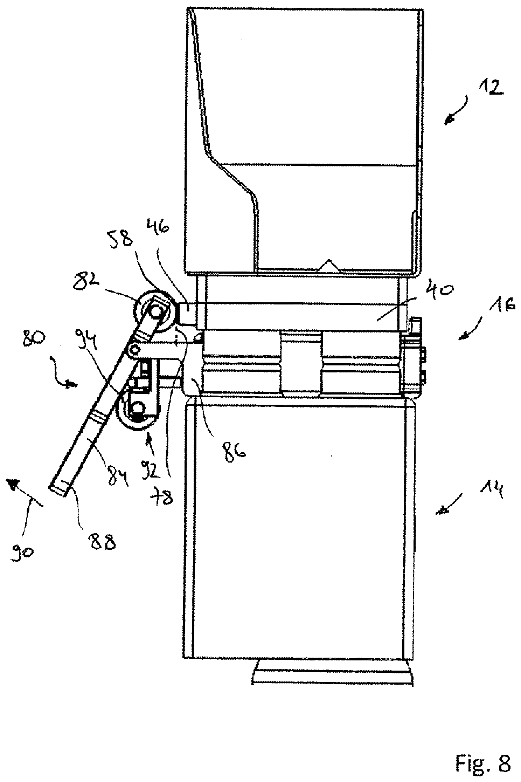

Es ist möglich, dass die Betätigungsfläche 58 oder die Mehrzahl von Betätigungsflächen 58 nicht unmittelbar betätigt werden, sondern mittels einer beispielhaft in Figur 8 dargestellten Betätigungseinrichtung 80 mit einem Betätigungselement 82. Das Betätigungselement 82 ist beispielsweise rollenförmig ausgebildet und wirkt entlang einer Kontaktlinie der Betätigungsebene 78, welche in Figur 8 senkrecht zu der Zeichnungsebene verläuft, gleichzeitig auf eine Mehrzahl von Betätigungsflächen 58 unterschiedlicher Verriegelungselemente 46.

Das Betätigungselement 82 ist an einem Hebel 84 angeordnet, der an einer Lagerung 86 schwenkbar gelagert ist. Eine Betätigungskraft kann beispielsweise mittels eines Griffs 88 ausgeübt werden, wobei eine Betätigung gemäß einer Betätigungsrichtung 90 dazu führt, dass das Betätigungselement 82 auf die Halterung 40 zu bewegt wird, auf die Betätigungsflächen 58 drückt und somit die Mehrzahl von Verriegelungselementen 46 aus der Verriegelungsposition (vgl. Figur 4) in die Freigabeposition (vgl. Figur 5) überführt.

Eine zusätzliche oder alternative Möglichkeit der Betätigung des Betätigungselements 82 besteht darin, einen Aktor 92 vorzusehen, beispielsweise in Form eines Pneumatikzylinders, der über ein Andrückelement 94 auf den Hebel 84 einwirkt und auf diese Weise das Betätigungselement 82 gegen die Mehrzahl der Betätigungsfläche 58 der Mehrzahl von Verriegelungselementen 46 andrückt.

## Patentansprüche

1. Reinraum-Fördereinrichtung (10) zur Anordnung in einem Reinraum-Barrieresystem, umfassend eine Förderrinne (12) zur Zwischenspeicherung und zum Transport von pharmazeutischem Schüttgut, wobei die Förderrinne (12) einen Rinnenkörper (18) aufweist, der einen rinnenförmigen Förderraum (20) begrenzt, welcher sich entlang einer Förderachse (22) für das pharmazeutische Schüttgut erstreckt, ferner umfassend einen Vibrationsantrieb (14) zur Erzeugung einer auf den Rinnenkörper (18) übertragbaren Vibrationsbewegung, wobei der Vibrationsantrieb (14) und der Rinnenkörper (18) über eine Verbindungseinrichtung (16) lösbar miteinander verbunden oder verbindbar sind, **dadurch gekennzeichnet, dass** die Verbindungseinrichtung (16) mindestens ein Verriegelungselement (46) aufweist, das in einer Halterung (40) verschiebbar gelagert ist und längs einer Verriegelungsachse (48) zwischen einer Verriegelungsposition, in welcher der Rinnenkörper (18) mit dem Vibrationsantrieb (14) verbunden ist, und einer Freigabeposition, in welcher der Rinnenkörper (18) von dem Vibrationsantrieb (14) gelöst ist, verschiebbar ist.

2. Reinraum-Fördereinrichtung nach Anspruch 1, **dadurch gekennzeichnet, dass** sich die Verriegelungsachse (48) in einer horizontalen Ebene erstreckt und/oder quer, insbesondere senkrecht, zu der Förderachse (22).

3. Reinraum-Fördereinrichtung (10) nach einem der vorstehenden Ansprüche, **dadurch gekennzeichnet, dass** die Verbindungseinrichtung (16) eine Vorspanneinrichtung (62) aufweist, mittels welcher das mindestens eine Verriegelungselement (46) in der Verriegelungsposition vorgespannt ist.

4. Reinraum-Fördereinrichtung (10) nach einem der vorstehenden Ansprüche, **dadurch gekennzeichnet, dass** das mindestens eine Verriegelungselement (46) bezogen auf die Verriegelungsachse (48) rotationssymmetrisch ist.

5. Reinraum-Fördereinrichtung (10) nach einem der vorstehenden Ansprüche, **dadurch gekennzeichnet, dass** die Halterung (40) an dem Vibrationsantrieb (14) angeordnet ist.

6. Reinraum-Fördereinrichtung (10) nach einem der vorstehenden Ansprüche, **dadurch gekennzeichnet, dass** das mindestens eine Verriegelungselement (46) in seiner Verriegelungsposition formschlüssig und/oder kraftschlüssig mit einem Gegenelement (68) zusammenwirkt, das vorzugsweise mit dem Rinnenkörper (18) verbunden ist, insbesondere unbewegbar mit dem Rinnenkörper (18) verbunden ist.

7. Reinraum-Fördereinrichtung (10) nach Anspruch 6, **dadurch gekennzeichnet, dass** das Gegenelement (68) rotationssymmetrisch ausgebildet ist.

8. Reinraum-Fördereinrichtung (10) nach einem der vorstehenden Ansprüche, **dadurch gekennzeichnet, dass** das mindestens eine Verriegelungselement (46) mittels einer zu der Verriegelungsachse (48) parallelen Betätigungskraft aus der Verriegelungsposition in die Freigabeposition überführbar ist.

9. Reinraum-Fördereinrichtung (10) nach einem der vorstehenden Ansprüche, **gekennzeichnet durch** eine Mehrzahl von Verriegelungselementen (46), welche vorzugsweise zueinander parallel angeordnet und in der Halterung (40) gelagert sind.

10. Reinraum-Fördereinrichtung (10) nach Anspruch 9, umfassend eine Betätigungseinrichtung (80) zur simultanen Betätigung der Mehrzahl der Verriegelungselemente (46).

11. Reinraum-Fördereinrichtung (10), **dadurch gekennzeichnet, dass** die Reinraum-Fördereinrichtung - bei Rückbezug auf einen der Ansprüche 1 bis 8 - einen Aktor zur Betätigung des mindestens einen Verriegelungselements (46) umfasst, oder - bei Rückbezug auf Anspruch 9 - einen Aktor zur Betätigung der Mehrzahl von Verriegelungselementen (46) umfasst, oder - bei Rückbezug auf Anspruch 10 - einen Aktor (92) zur Betätigung der Betätigungseinrichtung (80) umfasst.

12. Reinraum-Fördereinrichtung (10) nach Anspruch 11, **dadurch gekennzeichnet, dass** der Aktor durch eine bezogen auf den Vibrationsantrieb stationäre Antriebseinrichtung oder durch einen robotischen Manipulator gebildet ist.

13. Reinraum-Fördereinrichtung (10) nach einem der vorstehenden Ansprüche, **gekennzeichnet durch** eine Handhabungsvorrichtung zur Handhabung und Positionierung der Förderrinne (12) relativ zu der Vibrationseinrichtung (14).

14. Reinraum-Fördereinrichtung (10) nach Anspruch 13**, dadurch gekennzeichnet, dass** die Handhabungsvorrichtung durch einen robotischen Manipulator gebildet ist**.**

15. Reinraum-Fördereinrichtung (10), **dadurch gekennzeichnet, dass** - bei Rückbezug auf einen der Ansprüche 1 bis 14 - die Förderrinne (12) einen Betätigungskörper aufweist, mittels welchem eine Betätigungsfläche (58) des mindestens eine Verriegelungselement (46) durch Aufsetzen der Förderrinne (12) auf den Vibrationsantrieb (14) betätigbar ist**,** und/oder dass - bei Rückbezug auf Anspruch 13 oder 14 - die Handhabungsvorrichtung einen Betätigungskörper aufweist, mittels welchem eine Betätigungsfläche (58) des mindestens eine Verriegelungselement (46) durch Aufsetzen der Förderrinne (12) auf den Vibrationsantrieb (14) betätigbar ist**.**
